# EUROPEAN PATENT APPLICATION

(11) **EP 1 010 725 A2**
(43) Date of publication of application: **21.06.2000**
(21) Application number: 99125261.0
(22) Date of filing: 17.12.1999
(51) Int. Cl.: C08L 69/00

(54) **Thermoplastic polycarbonate composition**

(30) Priority: 17.12.1998 JP 35885898; 17.12.1998 JP 35885998
(71) Applicant: Kaneka Corporation, Osaka-shi, Osaka-fu (JP)
(72) Inventor: Kawai, Hideki, Kobe-shi, Hyogo-ken (JP); Yamaguchi, Katsumi, Kobe-shi, Hyogo-ken (JP); Takaki, Akira, Kobe-shi, Hyogo-ken (JP)
(74) Representative: VOSSIUS & PARTNER

(57) **Abstract**

Resin compositions comprising (A) a polycarbonate resin and (B) a copolymer of (i) 0.1 to 10 % by weight of a (meth)acrylic acid ester containing epoxy group, hydroxyl group or alkoxy group, (ii) 5 to 90 % by weight of a (meth)acrylic acid ester other than the component (i), (iii) 5 to 70 % by weight of an aromatic vinyl compound, and (iv) 0 to 50 % by weight of other monomer copolymerizable with the components (i) to (iii). The molding processability of polycarbonate resins or blends of polycarbonate resin, aromatic vinyl copolymer and rubber-containing graft copolymer can be improved by the incorporation of the copolymer (B) without impairing the properties that the polycarbonate resins possess.

## Description

The present invention relates to a thermoplastic resin composition, and more particularly to a polycarbonate resin composition which is improved in molding processability with maintaining good dynamical and optical properties of polycarbonate resin materials.

Polycarbonate resins are transparent and are also known as a resin which has a high impact resistance among engineering plastics and which has a good heat deformation resistance. They have been used in various fields by utilizing these properties. However, polycarbonate resins have the defects that the impact resistance greatly depends on the thickness of moldings and that the melt viscosity is high and accordingly the resins are poor in molding processability. For the purpose of eliminating these defects while maintaining excellent properties of polycarbonate resins, various attempts have been made.

For example, it is attempted to blend polycarbonate resins with elastomeric polymers such as ABS resin and MBS resin to form polymer alloys. Such polycarbonate-based polymer alloys have satisfactory mechanical properties, but are still unsatisfactory in melt fluidity. In case of producing large-size molded articles or molded articles having a complicated shape by injection molding of polycarbonate resins or polycarbonate-based polymer alloys, they are short of melt fluidity and are hard to be molded. For the purpose of improving the melt fluidity, it is attempted to incorporate various low-viscosity polymers, lubricants or plasticizers into the polycarbonate resins or polymer alloys. However, the incorporation thereof may impair the mechanical property or transparency.

It is an object of the present invention is to provide a polycarbonate resin composition which is improved in molding processability without impairing the transparency and mechanical properties of polycarbonate resins.

A further object of the present invention is to provide a polycarbonate-based polymer alloy which is improved in molding processability without impairing the mechanical properties of polymer alloys.

These objects have been achieved by the surprising finding that the melt fluidity of polycarbonate resins can be improved without impairing the transparency and mechanical properties by incorporating a specific (meth)acrylate copolymer having a functional group into a polycarbonate resin. It has been further found that this specific copolymer is also effective for improving the melt fluidity of polycarbonate-based polymer alloys and a thermoplastic resin composition having excellent melt fluidity and mechanical properties can be obtaining by incorporating this specific copolymer into a specific polycarbonate-based polymer blend.

In accordance with the present invention, there is provided a thermoplastic resin composition comprising:
(A) a polycarbonate resin, and
(B) 0.01 to 10 parts by weight, based on 100 parts by weight of said polycarbonate resin, of a copolymer obtained by polymerizing a monomer mixture of (i) 0.1 to 10 % by weight of a (meth)acrylic acid ester containing at least one member selected from the group consisting of epoxy group, hydroxyl group and an alkoxy group, (ii) 5 to 90 % by weight of a (meth)acrylic acid ester other than the component (i), (iii) 5 to 70 % by weight of an aromatic vinyl compound, and (iv) 0 to 50 % by weight of other monomer copolymerizable with the components (i) to (iii).

The present invention also provides a thermoplastic resin composition comprising:
(A) a polycarbonate resin,
(B) 0.01 to 10 parts of a copolymer obtained by polymerizing a monomer mixture of (i) 0.1 to 10 % by weight of a (meth)acrylic acid ester containing at least one member selected from the group consisting of epoxy group, hydroxyl group and alkoxy group, (ii) 5 to 90 % by weight of a (meth)acrylic acid ester other than the component (i), (iii) 5 to 70 % by weight of an aromatic vinyl compound, and (iv) 0 to 50 % by weight of other monomer copolymerizable with the components (i) to (iii),
(C) 5 to 200 parts by weight, based on 100 parts by weight of said polycarbonate resin, of a copolymer obtained by polymerizing a monomer mixture of (a) 0 to 30 % by weight of a (meth)acrylic acid ester, (b) 60 to 90 % by weight of an aromatic vinyl compound, (c) 10 to 40 % by weight of a vinyl cyanide compound, and (d) 0 to 30 % by weight of other monomer copolymerizable with the components (a) to (c), and
(D) 5 to 200 parts by weight, based on 100 parts by weight of said polycarbonate resin, of a graft copolymer obtained by polymerizing 70 to 10 parts by weight of a monomer mixture of at least two members selected from three members consisting of (a) a (meth)acrylic acid ester, (b) an aromatic vinyl compound and (c) a vinyl cyanide compound, and (d) 0 to 20 % by weight of other monomer copolymerizable with the components (a) to (c) in the presence of 30 to 90 parts by weight of an rubber-like polymer having a glass transition temperature of not more than 0°C, the total of said monomer mixture and said rubber-like polymer being 100 parts by weight,
   wherein said parts of (B) is parts by weight based on 100 parts by weight of the total of the components (A), (C) and (D).

The polycarbonate resin (A) used in the present invention is thermoplastic resins obtained by reacting at least one dihydric phenol compound, e.g., a bisphenol compound, with phosgene or a carbonic acid diester such as diphenyl carbonate. Examples of the dihydric phenol compound are, for instance, hydroquinone, 4,4'-dihydroxydiphenyl, 1,1-bis(4-hydroxyphenyl)ethane, 2,2-bis(4-hydroxyphenyl)propane, 2,2-bis(4-hydroxyphenylbutane, bis(4-hydroxyphenyl)sulfone, 4,4'-dihydroxydiphenyl ether, and the like. These may be used alone or in admixture thereof. A phenolic compound having a valency of 3 or more can also be used so long as the obtained polycarbonate resins maintain a thermoplasticity. Known polycarbonate resins can be used in the present invention. Polycarbonate resins prepared from 2,2-bis(4-hydroxyphenyl)propane, which are commercially available, are preferred in the present invention from the viewpoint of mechanical strength, heat resistance and transparency.

The polycarbonate resin (A) may be used in combination with other thermoplastic resins such as polyester resins and polyamide resins. In this case, it is preferable that the amount of the polycarbonate resin is at least 80 % by weight based on the total of the polycarbonate resin and other thermoplastic resins.

The component (B) used in the present invention is a copolymer obtained by polymerizing a monomer mixture of (i) 0.1 to 10 % by weight of a (meth)acrylic acid ester containing at least one member selected from the group consisting of epoxy group, hydroxyl group and an alkoxy group, (ii) 5 to 90 % by weight of a (meth)acrylic acid ester other than the component (i), (iii) 5 to 70 % by weight of an aromatic vinyl compound, and (iv) 0 to 50 % by weight of other monomer copolymerizable with the components (i) to (iii), the total of (i) to (iv) being 100 % by weight.

Examples of the (meth)acrylic acid ester (i) containing epoxy, hydroxyl or alkoxy group are, for instance, an epoxy group-containing alkyl acrylate such as glycidyl acrylate, an epoxy group-containing alkyl methacrylate such as glycidyl methacrylate, a hydroxyalkyl acrylate such as 2-hydroxyethyl acrylate or 2-hydroxypropyl acrylate, a hydroxyalkyl methacrylate such as 2-hydroxyethyl methacrylate or 2-hydroxypropyl methacrylate, an alkoxyalkyl acrylate such as methoxyethyl acrylate or ethoxyethyl acrylate, an alkoxyalkyl methacrylate such as methoxyethyl methacrylate or ethoxyethyl methacrylate, and the like. In these alkyl (meth)acrylates, the number of carbon atoms of the alkyl groups are preferably from 2 to 8. Glycidyl methacrylate is preferred from the viewpoint of improvement in melt fluidity. The (meth)acrylic acid ester (i) is used in an amount of 0.1 to 10 % by weight, preferably 0.2 to 5 % by weight, based on total weight of the monomers used from the viewpoint of improvement in melt fluidity.

The (meth)acrylic acid esters (ii) other than the component (i) are ester compounds of acrylic acid and methacrylic acid, preferably C₁ to C₈ alkyl acrylates and methacrylates. Examples thereof are, for instance, methyl methacrylate, ethyl methacrylate, butyl methacrylate, methyl acrylate, ethyl acrylate, butyl acrylate, and the like. The other (meth)acrylic acid ester (ii) is used in an amount of 5 to 70 % by weight based on the total weight of the monomers used.

The aromatic vinyl compound (iii) is a compound having one vinylic double bond and at least one benzene ring in its molecule. Examples of the aromatic vinyl compound (iii) are, for instance, styrene, 4-methoxystyrene, 4-ethoxystyrene, 4-propoxystyrene, 4-butoxystyrene, a methylphenylethylene such as 2-methylstyrene, 3-methylstyrene, 4-methylstyrene or 2,5-dimethylstyrene, 4-ethylstyrene, a halophenylethylene such as 2-chlorostyrene, 3-chlorostyrene, 4-chlorostyrene, 2,4-dichlorostyrene, 4-bromostyrene or 2,5-dichlorostyrene, α-methylstyrene, and the like. The aromatic vinyl compound is used in an amount of 5 to 70 % by weight, peferably 25 to 70 % by weight, based on the total weight of the monomer used, from the viewpoint of maintaining the transparency of the polycarbonate resin (A) by making the refraction index of the obtained copolymer close to that of the polycarbonate resin (A).

Examples of the other copolymerizable monomer (iv) used in the preparation of the copolymer (B) are, for instance, a vinyl cyanide compound such as acrylonitrile, methacrylonitrile, vinylidene cyanide or 1,2-dicyanoethylene, a maleimide compound, acrylic acid, methacrylic acid, and other vinyl monomers. The other copolymerizable monomer (iv) is optionally used in an amount of up to 50 % by weight based on the total weight of the monomers used.

The copolymer (B) having a high molecular weight is inferior in dispersibility into the polycarbonate resin (A). Therefore, it is preferable that the copolymer (B) has a molecular weight such that the inherent viscosity [η] of its toluene solution measured at 30°C is from 0.01 to 2.0. When the copolymer (B) is incorporated into polycarbonate-based polymer blends, it is more preferable that the copolymer (B) has an inherent viscosity of 0.05 to 2.0 measured at 30°C in toluene.

The copolymer (B) can be prepared by emulsion polymerization, suspension polymerization, solution polymerization, and the like. Emulsion polymerization is preferable. The emulsion polymerization is carried out in known emulsification and polymerization manners. The molecular weight can be adjusted by adjusting the amount of a catalyst or by the use of a chain transfer agent such as a mercaptan compound.

The polycarbonate resin (A) can be used alone or in the form of a polymer blend with other polymers, preferably a blend of the above-mentioned components (A), (C) and (D). The amount of the copolymer (B) is from 0.01 to 10 parts by weight based on 100 parts by weight of the polycarbonate resin (A) or based on 100 parts by weight of the total of other polymer components such as the components (A), (C) and (D). When the polycarbonate resin is singly used with the copolymer (B), preferably the amount of the copolymer (B) is from 0.1 to 5 parts by weight per 100 parts by weight of the polycarbonate resin (A). When the copolymer (B) is incorporated into the polymer blend of the components (A), (C) and (D), preferably the amount of the copolymer (B) is from 0.05 to 10 parts by weight, especially from 0.1 to 7 parts by weight, based on 100 parts by weight of the total of the components (A), (C) and (D). If the amount of the copolymer (B) is less than 0.01 part by weight, improvement in melt fluidity is not achieved, and if the amount is more than 10 parts by weight, the mechanical properties and/or the transparency are lowered.

The mechanical properties such as impact resistance of the polycarbonate resin can be improved by incorporation of the graft copolymer (D) wherein a monomer mixture of at least two members selected from three members consisting of (a) a (meth)acrylic acid ester, (b) an aromatic vinyl compound and (c) a vinyl cyanide compound, and (d) up to 20 % by weight of other monomer copolymerizable with the components (a) to (c) is graft-polymerized onto a rubber-like polymer having a glass transition temperature of not more than 0°C. The copolymer (C) serves to improve the compatibility of the graft copolymer (D) with the polycarbonate resin (A). The copolymer (C) is prepared from a monomer mixture of (a) 0 to 30 % by weight of a (meth)acrylic acid ester, (b) 60 to 90 % by weight of an aromatic vinyl compound, (c) 10 to 40 % by weight of a vinyl cyanide compound, and (d) up to 30 % by weight of other monomer copolymerizable with the components (a) to (c).

The (meth)acrylic acid esters (a) used in the preparation of the copolymer (C) and the graft copolymer (D) are ester compounds of acrylic acid and methacrylic acid, especially unsubstituted alkyl acrylates and methacrylates. Examples of the (meth)acrylic acid ester (a) are, for instance, methyl acrylate, ethyl acrylate, butyl acrylate, methyl methacrylate, ethyl methacrylate, butyl methacrylate, isopropyl methacrylate, and other alkyl (meth)acrylates.

The aromatic vinyl compound (b) is a compound having one vinylic double bond and at least one benzene ring in its molecule. Examples of the aromatic vinyl compound (b) are, for instance, styrene, 4-methoxystyrene, 4-ethoxystyrene, 4-propoxystyrene, 4-butoxystyrene, 2-methylstyrene, 3-methylstyrene, 4-methylstyrene, 4-ethylstyrene, 2,5-dimethylstyrene, 2-chlorostyrene, 3-chlorostyrene, 4-chlorostyrene, 2,4-dichlorostyrene, 4-bromostyrene, 2,5-dichlorostyrene, α-methylstyrene, and the like.

The vinyl cyanide compounds (c) used in the preparation of the copolymer (C) and the graft copolymer (D) are compounds having one vinylic double bond and at least one cyano group in its molecule. Examples thereof are, for instance, acrylonitrile, methacrylonitrile, vinylidene cyanide, 1,2-dicyanoethylene, and the like.

In the preparation of the copolymer (C), the monomer mixture may optionally contain other copolymerizable monomers (d) in an amount of at most 30 % by weight based on the total weight of the monomers used. In the preparation of the graft copolymer (D), the monomer mixture may optionally contain other copolymerizable monomers (d) in an amount of at most 20 % by weight based on the total weight of the monomers used. Examples of the other copolymerizable monomer (d) are, for instance, a maleimide compound such as an N-substituted maleimide compound, acrylic acid, methacrylic acid, and other vinyl compounds. In the preparation of the copolymer (C), an N-substituted maleimide compound is preferred as the other copolymerizable monomer (d) from the viewpoint of heat resistance.

The graft copolymer (D) is prepared by graft-polymerizing a monomer mixture onto a rubber-like polymer having a grass transition temperature Tg of not more than 0°C which exhibits a rubber elasticity in the temperature region of ordinary use. Examples of the rubber-like polymer are, for instance, polybutadiene, polyisoprene, styrene-butadiene rubber (SBR), acrylonitrile-butadiene rubber (NBR), natural rubber, silicone rubber, acrylic rubber, ethylene-propylene rubber, and the like. In general, the particle size of the rubber-like polymer is from 0.1 to 1.0 µm. The ratio of the rubber-like polymer to the monomer mixture to be graft-polymerized is from 30 : 70 to 90 : 10 by weight.

The copolymer (C) and the graft copolymer (D) can be prepared by known processes such as emulsion polymerization or emulsion-suspension polymerization.

The amounts of the copolymers (C) and (D) are determined according to the properties required such as mechanical properties, heat resistance and the like. In general, the copolymer (C) is used in an amount of 0 to 200 parts by weight, preferably 5 to 200 parts by weight, per 100 parts by weight of the polycarbonate resin (A). The graft copolymer (D) is used in an amount of 5 to 200 parts by weight per 100 parts by weight of the polycarbonate resin (A).

The resin composition of the present invention is prepared by a known process, for example, by mixing the components (A) and (B) or the components (A) to (D), each of which has been previously prepared separately, in a usual blending manner using a mixing machine such as Henschel mixer or tumbler, and forming into a suitable form such as pellets using a usual device such as single screw extruder or twin screw extruder.

The resin composition of the present invention may contain usual additives such as antioxidant, heat stabilizer, light stabilizer, ultraviolet absorber, lubricant, plasticizer, releasing agent, antistatic agent, slipping agent, colorant, and the like.

The present invention is more specifically explained by means of examples in which all parts are by weight unless otherwise noted. It is to be understood that the present invention is not limited to these examples.

In the following Examples and Comparative Examples, evaluation of physical properties was made by the following methods.

### Izod impact strenght

Notched Izod impact strength was measured according to JIS K-7110 using notched injection-molded specimens having a thickness of 1/4 inch.

### Transparency

Transparency was measured according to ASTM D-1003 using injection-molded 3 mm thick plates.

### Melt index

Melt index was measured according to ASTM K-6730.

### Molding fluidity

Molding fluidity was measured using a spiral mold having a gate of 4 × 4 mm, a width of 10 mm and a thickness of 3 mm.

### EXAMPLE 1

A reactor equipped with a stirrer and a condenser was charged with 200 parts of distilled water, 1.0 part of sodium dioctylsulfosuccinate, 0.01 part of disodium ethylenediaminetetraacetate, 0.005 part of FeSO₄·7H₂O and 0.5 part of formaldehyde sodium bisulfite. After purging the reactor with nitrogen gas, the temperature of the reactor was elevated to 60°C with stirring in the nitrogen stream, and a mixture of 30 parts of methyl methacrylate (MMA), 20 parts of butyl acrylate (BA), 50 parts of styrene (ST), 1.0 part of glycidyl methacrylate (GMA) and 1.0 part of cumene hydroperoxide was continuously added to the reactor over 5 hours. After the completion of the addition, the system was further stirred for 1 hour at 60°C to complete the polymerization.

The obtained emulsion was cooled, salted out with calcium chloride, filtered and dried to give a copolymer (B). The inherent viscosity [η] of the obtained copolymer was measured. The result is shown in Table 1 together with the composition of the copolymer.

The thus obtained copolymer (B) was added to a polycarbonate resin having a number average molecular weight of 24,000 in terms of polystyrene (commercially available under the trade mark "Lexan 141R" from GE Plastics Japan), the bisphenol component of which was 2,2-bis(4-hydroxyphenyl)propane, in an amount of 1 part per 100 parts of the polycarbonate resin. They were pre-mixed and the mixture was melt-kneaded at 250°C by a single screw extruder made by Tabata Kikai Kabushiki Kaisha to give pellets. The obtained pellets were dried at 100°C for more than 5 hours and molded by a 160 t injection molding machine at a cylinder temperature of 290°C and a mold temperature of 80°C to give 1/4 inch Izod impact test specimens and plate specimens having a size of 100×100×3 mm. Using these specimens, the total light transmission and Izod impact strength were measured.

The melt index value was measured at 260°C under 5 kg load.

Also, the molding fluidity was measured using a 75 t injection molding machine at a cylinder temperature of 290°C and a maximum injection pressure of 1,500 kg/cm².

The results are shown in Table 2.

### EXAMPLES 2 and 3

Copolymers (B) were prepared in the same manner as in Example 1 except that 1.0 part of 2-hydroxyethyl methacrylate (2-HMA) or 1.0 part of ethoxyethyl methacrylate (EMA) was used instead of 1.0 part of glycidyl methacrylate. The inherent viscosity thereof was shown in Table 1.

A polycarbonate resin was incorporated with the obtained copolymer (B) and the physical properties thereof were evaluated in the same manner as in Example 1. The results are shown in Table 2.

### EXAMPLES 4 and 5

Copolymers (B) were prepared in the same manner as in Example 1 except that glycidyl methacrylate was used in an amount of 2.0 parts or 5.0 parts. The inherent viscosity thereof was shown in Table 1.

A polycarbonate resin was incorporated with the obtained copolymer (B) and the physical properties thereof were evaluated in the same manner as in Example 1. The results are shown in Table 2.

### EXAMPLE 6

A copolymer (B) was prepared from a monomer mixture of 60 parts of methyl methacrylate, 20 parts of butyl acrylate, 20 parts of styrene and 1 part of glycidyl methacrylate in the same manner as in Example 1. The inherent viscosity thereof was shown in Table 1.

A polycarbonate resin was incorporated with the obtained copolymer (B) and the physical properties thereof were evaluated in the same manner as in Example 1. The results are shown in Table 2.

### EXAMPLE 7

A copolymer (B) was prepared from a monomer mixture of 20 parts of methyl methacrylate, 15 parts of butyl acrylate, 65 parts of styrene and 1 part of glycidyl methacrylate in the same manner as in Example 1. The inherent viscosity thereof was shown in Table 1.

A polycarbonate resin was incorporated with the obtained copolymer (B) and the physical properties thereof were evaluated in the same manner as in Example 1. The results are shown in Table 2.

### COMPARATIVE EXAMPLE 1

A polycarbonate resin was molded without incorporating any copolymer (B) and the physical properties thereof were evaluated in the same manner as in Example 1. The results are shown in Table 2.

### COMPARATIVE EXAMPLE 2

A copolymer was prepared in the same manner as in Example 1 except that glycidyl methacrylate was not used. The inherent viscosity thereof is shown in Table 1.

A polycarbonate resin was incorporated with the obtained copolymer and the physical properties thereof were evaluated in the same manner as in Example 1. The results are shown in Table 2.

### COMPARATIVE EXAMPLE 3

The procedure of Example 1 was repeated except that the copolymer (B) was incorporated into polycarbonate resin in an amount of 15 parts. The results are shown in Table 2.

### EXAMPLE 8

A copolymer (B) was prepared in the same manner as in Example 1 except that cumene hydroperoxide was used in an amount of 0.5 part instead of 1.0 part. The inherent viscosity thereof was shown in Table 1.

A polycarbonate resin was incorporated with the obtained copolymer (B) and the physical properties thereof were evaluated in the same manner as in Example 1. The results are shown in Table 2.

### COMPARATIVE EXAMPLE 4

A copolymer was prepared from a monomer mixture of 60 parts of methyl methacrylate, 35 parts of butyl acrylate, 5 parts of styrene and 1 part of glycidyl methacrylate in the same manner as in Example 1. The inherent viscosity thereof was shown in Table 1.

A polycarbonate resin was incorporated with the obtained copolymer (B) and the physical properties thereof were evaluated in the same manner as in Example 1. The results are shown in Table 2.

**Table 1**

| | Composition of copolymer (B) (part) | | | | | | Inherent viscosity |
|---|---|---|---|---|---|---|---|
| | MMA | BA | ST | GMA | 2-HMA | EMA | |
| Example 1 | 30 | 20 | 50 | 1 | - | - | 0.4 |
| Example 2 | 30 | 20 | 50 | - | 1 | - | 0.4 |
| Example 3 | 30 | 20 | 50 | - | - | 1 | 0.4 |
| Example 4 | 30 | 20 | 50 | 2 | - | - | 0.4 |
| Example 5 | 30 | 20 | 50 | 5 | - | - | 0.4 |
| Example 6 | 60 | 20 | 20 | 1 | - | - | 0.4 |
| Example 7 | 20 | 15 | 65 | 1 | - | - | 0.4 |
| Com. Ex. 2 | 30 | 20 | 50 | - | - | - | 0.4 |
| Com. Ex. 3 | 30 | 20 | 50 | 1 | - | - | 0.4 |
| Example 8 | 30 | 20 | 50 | 1 | - | - | 2.5 |
| Com. Ex. 4 | 60 | 35 | 5 | 1 | - | - | 0.4 |

**Table 2**

| | Amount of copolymer (B) (part) | Total light transmission (%) | Izod impact strength (kg·cm/cm²) | Melt index (g/10min.) | Molding fluidity (mm) |
|---|---|---|---|---|---|
| Ex. 1 | 1 | 87.5 | 42 | 23.0 | 540 |
| Ex. 2 | 1 | 87.0 | 40 | 21.5 | 523 |
| Ex. 3 | 1 | 87.2 | 45 | 20.8 | 536 |
| Ex. 4 | 1 | 86.8 | 40 | 25.0 | 550 |
| Ex. 5 | 1 | 86.5 | 39 | 28.0 | 560 |
| Ex. 6 | 1 | 86.0 | 41 | 23.1 | 545 |
| Ex. 7 | 1 | 87.8 | 39 | 22.8 | 534 |
| Com. Ex. 1 | 0 | 89.0 | 44 | 13.0 | 440 |
| Com. Ex. 2 | 1 | 87.0 | 41 | 12.5 | 435 |
| Com. Ex. 3 | 15 | 80.0 | 22 | 26.0 | 520 |
| Ex. 8 | 1 | 85.0 | 24 | 13.5 | 480 |
| Com. Ex 4 | 1 | 60.0 | 42 | 21.8 | 518 |

### EXAMPLE 9

### [Preparation of copolymer (B)]

A copolymer (B) was prepared in the same manner as in Example 1.

### [Preparation of copolymer (C)]

A reactor equipped with a stirrer and a condenser was charged with the following ingredients in a nitrigen stream.

| Ingredients | Amount (parts) |
|---|---|
| Water | 250 |
| Formaldehyde sodium sulfoxylate | 0.4 |
| Ferrous sulfate | 0.0025 |
| Disodium ethylenediaminetetraacetate | 0.01 |
| Sodium dioctylsulfosuccinate | 3 |

After elevating the temperature to 60°C with stirring in a nitrogen stream, a mixture of 70 parts of acrylonitrile and 30 parts of α-methylstyrene was continuously added dropwise to the reactor over 5 hours together with cumene hydroperoxide as an initiator and tert-dodecylmercaptan as an agent for adjusting the degree of polymerization. After the completion of the addition, the system was further stirred for 1 hour at 60°C to complete the polymerization.

### [Preparation of graft copolymer (D)]

A reactor equipped with a stirrer and a condenser was charged with the following ingredients in a nitrigen stream.

| Ingredients | Amount (parts) |
|---|---|
| Water | 250 |
| Sodium dioctylsulfosuccinate | 3.0 |
| Potassium persulfate | 0.5 |
| Butadiene | 0.4 |
| t-Dodecylmercaptan | 0.3 |

The polymerization was carried out at 60°C and was terminated when the conversion of polymerization of butadiene reached 80 %, and the unreacted butadiene was removed to give a latex of polybutadiene rubber.

A reactor equipped with a stirrer and a condenser was charged with the obtained polybutadiene and the following ingredients in a nitrigen stream.

| Ingredients | Amount (parts) |
|---|---|
| Water | 250 |
| Formaldehyde sodium sulfoxylate | 0.2 |
| Ferrous sulfate | 0.0025 |
| Disodium ethylenediaminetetraacetate | 0.01 |
| Rubber-like polymer (polybutadiene) | 60 |

After elevating the temperature to 60°C with stirring in a nitrogen stream, a monomer mixture of 10 parts of acrylonitrile and 30 parts of styrene was continuously added dropwise to the reactor over 5 hours together with cumene hydroperoxide. After the completion of the addition, the system was further stirred for 1 hour at 60°C to complete the polymerization.

To each of the latexes of the copolymer (C) and the graft copolymer (D) was added a phenolic antioxidant, and each latex was coagulated with calcium chloride, washed, dehydrated and dried to give each of copolymers (C) and (D).

### [Preparation of polycarbonate resin composition]

To 100 parts of a polycarbonate resin (commercially available under the trade mark "Toughron FN2500A" from Idemitus Sekiyu Kagaku Kabushiki Kaisha) were added 2 parts of the copolymer (B), 70 part of the copolymer (C) and 30 parts of the graft copolymer (D). They were pre-mixed and the mixture was melt-kneaded at 270°C by a 40 mm single screw extruder made by Tabata Kikai Kabushiki Kaisha to give pellets. The obtained pellets were molded by a 160 t injection molding machine at a cylinder temperature of 260°C and a mold temperature of 80°C to give 1/4 inch Izod impact test specimens, and the Izod impact strength was measured.

The molding fluidity was measured using a 75 t injection molding machine at a cylinder temperature of 250°C and a maximum injection pressure of 1,500 kg/cm².

The results are shown in Table 3.

### EXAMPLES 10 to 16

Polycarbonate resin compositions were prepared in the same manner as in Example 9 except that the copolymers (B) obtained in Examples 2 to 8 were used instead of the copolymer (B) obtained in Example 1.

The results are shown in Table 3.

### COMPARATIVE EXAMPLE 5

A polycarbonate resin composition was prepared in the same manner as in Example 9 except that no copolymer (B) was used. The results are shown in Table 3.

### COMPARATIVE EXAMPLE 6

The procedure of Example 9 was repeated except that glycidyl methacrylate was not used in the preparation of the copolymer (B). The results are shown in Table 3.

### COMPARATIVE EXAMPLE 7

The procedure of Example 9 was repeated except that the copolymer (B) was used in an amount of 15 parts. The results are shown in Table 3.

**Table 3**

| | Resin composition (part) | | | | Izod impact strength (kg·cm/cm²) | Molding fluidity (mm) |
|---|---|---|---|---|---|---|
| | Polycarbonate (A) | Copolymer (B) | Copolymer (C) | Graft copolymer (D) | | |
| Ex. 9 | 100 | 70 | 30 | 2 | 30 | 520 |
| Ex. 10 | 100 | 70 | 30 | 2 | 28 | 513 |
| Ex. 11 | 100 | 70 | 30 | 2 | 25 | 526 |
| Ex. 12 | 100 | 70 | 30 | 2 | 30 | 540 |
| Ex. 13 | 100 | 70 | 30 | 2 | 29 | 550 |
| Ex. 14 | 100 | 70 | 30 | 2 | 31 | 517 |
| Ex. 15 | 100 | 70 | 30 | 2 | 27 | 523 |
| Com. Ex. 5 | 100 | 70 | 30 | 0 | 24 | 420 |
| Com. Ex. 6 | 100 | 70 | 30 | 2 | 27 | 415 |
| Com. Ex. 7 | 100 | 70 | 30 | 15 | 12 | 520 |
| Ex. 16 | 100 | 70 | 30 | 2 | 24 | 480 |

It would be understood from Tables 2 and 3 that according to the present invention, resin compositions having an improved molding processability can be obtained without impairing the dynamical and optical properties of polycarbonate resins or the dynamical properties of polycarbonate resin alloys, and the resin compositions are industrially useful.

## Claims

1. A thermoplastic resin composition comprising:
(A) a polycarbonate resin, and
(B) 0.01 to 10 parts by weight, based on 100 parts by weight of said polycarbonate resin, of a copolymer obtained by polymerizing a monomer mixture of (i) 0.1 to 10 % by weight of a (meth)acrylic acid ester containing at least one member selected from the group consisting of epoxy group, hydroxyl group and an alkoxy group, (ii) 5 to 90 % by weight of a (meth)acrylic acid ester other than the component (i), (iii) 5 to 70 % by weight of an aromatic vinyl compound, and (iv) 0 to 50 % by weight of other monomer copolymerizable with the components (i) to (iii).

2. The composition of Claim 1, wherein said polycarbonate resin (A) is 2,2-bis(4-hydroxyphenyl)propane-based polycarbonate resin.

3. The composition of Claim 1 or 2, wherein the other (meth)acrylic acid ester (ii) in said copolymer (B) is a C₁ to C₈ alkyl (meth)acrylate.

4. The composition of any of Claims 1 to 3, wherein the component (i) in said copolymer (B) is glycidyl (meth)acrylate.

5. The composition of any of Claims 1 to 4, wherein said aromatic vinyl compound (iii) in said copolymer (B) is at least one member selected from the group consisting of styrene, α-methylstyrene, a methylphenylethylene and a halophenylethylene.

6. The composition of any of Claims 1 to 5, wherein said copolymer (B) has an inherent viscosity [η] of 0.01 to 2.0 at 30°C in toluene.

7. The composition of any of Claims 1 to 6, wherein the content of the component (i) in said copolymer (B) is from 0.1 to 5 % by weight.

8. The composition of any of Claims 1 to 7, wherein the other (meth)acrylate (ii) in said copolymer (B) is at least one member selected from the group consisting of methyl methacrylate, ethyl methacrylate, butyl methacrylate, methyl acrylate, ethyl acrylate and butyl acrylate.

9. A thermoplastic resin composition comprising:
(A) a polycarbonate resin,
(B) 0.01 to 10 parts of a copolymer obtained by polymerizing a monomer mixture of (i) 0.1 to 10 % by weight of a (meth)acrylic acid ester containing at least one member selected from the group consisting of epoxy group, hydroxyl group and alkoxy group, (ii) 5 to 90 % by weight of a (meth)acrylic acid ester other than the component (i), (iii) 5 to 70 % by weight of an aromatic vinyl compound, and (iv) 0 to 50 % by weight of other monomer copolymerizable with the components (i) to (iii),
(C) 5 to 200 parts by weight, based on 100 parts by weight of said polycarbonate resin, of a copolymer obtained by polymerizing a monomer mixture of (a) 0 to 30 % by weight of a (meth)acrylic acid ester, (b) 60 to 90 % by weight of an aromatic vinyl compound, (c) 10 to 40 % by weight of a vinyl cyanide compound, and (d) 0 to 30 % by weight of other monomer copolymerizable with the components (a) to (c), and
(D) 5 to 200 parts by weight, based on 100 parts by weight of said polycarbonate resin, of a graft copolymer obtained by polymerizing 70 to 10 parts by weight of a monomer mixture of at least two members selected from three members consisting of (a) a (meth)acrylic acid ester, (b) an aromatic vinyl compound and (c) a vinyl cyanide compound, and (d) 0 to 20 % by weight of other monomer copolymerizable with the components (a) to (c) in the presence of 30 to 90 parts by weight of an rubber-like polymer having a glass transition temperature of not more than 0°C, the total of said monomer mixture and said rubber-like polymer being 100 parts by weight,
wherein said parts of (B) is parts by weight based on 100 parts by weight of the total of the components (A), (C) and (D).

10. The composition of Claim 9, wherein said polycarbonate resin (A) is2,2-bis(4-hydroxyphenyl)propane-based polycarbonate resin.

11. The composition of Claim 9 or 10, wherein the other (meth)acrylic acid ester (ii) in said copolymer (B) is a C₁ to C₈ alkyl (meth)acrylate.

12. The composition of any of Claims 9 to 11, wherein the component (i) in said copolymer (B) is glycidyl (meth)acrylate.

13. The composition of any of Claims 9 to 12, wherein said aromatic vinyl compound (iii) in said copolymer (B) is at least one member selected from the group consisting of styrene, α-methylstyrene, a methylphenylethylene and a halophenylethylene.

14. The composition of any of Claims 9 to 13, wherein said copolymer (B) has an inherent viscosity [η] of 0.05 to 2.0 at 30°C in toluene.

15. The composition of any of Claims 9 to 14, wherein the content of the component (i) in said copolymer (B) is from 0.1 to 5 % by weight.

16. The composition of any of Claims 9 to 15, wherein the other (meth)acrylate (ii) in said copolymer (B) is at least one member selected from the group consisting of methyl methacrylate, ethyl methacrylate, butyl methacrylate, methyl acrylate, ethyl acrylate and butyl acrylate.
